# EUROPEAN PATENT SPECIFICATION

(11) **EP 0 920 551 B1**
(45) Date of publication and mention of the grant of the patent: **29.10.2003**
(21) Application number: 97940613.9
(22) Date of filing: 25.08.1997
(51) Int. Cl.: D21C 5/02, D21C 3/20, D21C 9/08

(54) **METHOD OF AGGLOMERATING STICKIES IN AN AQUEOUS SLURRY OF WASTEPAPER**
VERFAHREN ZUM AGGLOMERIEREN VON KLEBENDEN VERUNREINIGUNGEN AUS ALTPAPIER-SUSPENSIONEN
PROCEDE D'AGGLOMERATION DES IMPURETES COLLANTES DANS UNE BOUE AQUEUSE DE PAPIERS DE REBUT

(30) Priority: 26.08.1996 US 697462
(43) Date of publication of application: 09.06.1999
(73) Proprietor: UNION CAMP CORPORATION, Wayne, New Jersey 07470-2068 (US)
(72) Inventor: THURMAN, Richard, Gary, Burlington, NJ 08011 (US)
(74) Representative: Plougmann & Vingtoft A/S
(86) International application number: US9714917
(87) International publication number: WO98009017

(56) References cited:
- US-A- 4 518 459
- US-A- 5 500 082
- TAPPI JOURNAL, Vol. 77, No. 7, issued July 1994, T.F. LING, "Effect of Pulping Conditions on Stickies Behavior in Office Waste Deinking Systems", pages 143-151.

## Description

### FIELD OF THE INVENTION

The present invention is directed toward a process of agglomerating an adhesive composition known in the industry as stickies from paper containing the same during the pulping of waste paper. An aqueous slurry of waste paper containing particles of stickies is treated with an effective amount of at least one long chain alcohol sufficient to agglomerate the stickies into sufficiently larger particles so that they can be effectively removed from the aqueous slurry.

### BACKGROUND OF THE INVENTION

Waste paper is a source of raw material used in the making of paper. Waste paper must be treated to form a pulp and to remove contaminants therefrom to form pulp fiber which can be processed into paper for reuse. One of the principal contaminants of waste paper is ink. The removal of ink from waste paper includes steps of converting the waste paper to pulp through the formation of an aqueous slurry. Various de-inking agents can then be added to the aqueous slurry to remove the ink. Various de-inking agents such as alkali metal silicates, oxidative bleaches, dispersions, higher fatty acids, and reaction products of, for example, alkalene oxide and mixtures of natural fat or oil and polyhydric alcohols have been used to de-ink waste paper.

Published Canadian Patent Application No. 2,101,593 identifies several prior art methods of de-inking waste paper using a variety of de-inking agents. There is also disclosed a process whereby de-inking is accomplished with long chain alcohols which enable ink particles to agglomerate.

T.F. Ling *et al.*, TAPPI Journal, vol. 77,no. 7, pages 143-151, "Effect of pulping conditions on stickies behaviour in office waste deinking systems" discloses a process for removing ink and stickies from a slurry of waste paper using a laser deinking material but without identifying this material, and where the slurry has solids levels of around 5%.

US 5,500,082 (Chang *et al.*) discloses a method of removing ink from slurry of printed waste paper, in particular xerographically printed paper, said slurry containing a long chain alcohol but less than 8% solids. Removal of stickies is not mentioned.

Inks employed in printed paper are principally composed of carbon and iron oxides. Small amounts of binders including high melting point adhesives may be found in ink compositions. The employment of de-inking agents to form agglomerates of ink particles has enabled the effective removal of ink from waste paper so that the cleaned fiber can be reused in paper making processes.

One of the major problems in the recycling of waste paper is the presence of significant amounts of adhesive compositions or stickies in the raw pulp. Stickies, especially those composed of pressure sensitive adhesives, are used, for example, on the back of self-adhering stamps, on envelopes and, more recently, on self adhering note paper sold, for example, under the tradename "Post-It".

Pressure sensitive adhesives of the type used on these products is very difficult to remove from waste paper. Currently, stickies are removed through a mechanical filtering process employing fine mesh screens, typically ranging from 0.004" to 0.010" in diameter. Despite the employment of mechanical filtering, a significant amount of the stickies may not be removed from the pulp which leads to unacceptable dark spots on the recycled paper.

It would therefore be a significant advance in the art of recycling waste paper for the development of a method of removing substantially all of the stickies in the waste paper such as customarily found on envelopes, stick-on note paper, stamps and the like.

### SUMMARY OF THE INVENTION

The present invention is generally directed to a method of removing stickies from paper containing the same, typically recycled paper containing up to 100% recycled paper. The paper is treated during pulping or thereafter with an agent particularly suited for agglomerating stickies into larger particles of sufficient size so that they can be readily removed from the aqueous slurry such as by mechanical filtering.

More specifically, the present invention is directed to a method of removing stickles from a pulp slurry containing at least partially recycled paper, said method comprising:
a) pulping said paper in an aqueous slurry heated to a temperature in the range of 30°C (86°F) to 76.6°C (170°F) at a pH of at least 7 having a solids content of from 8 to 18% by weight;
b) adding to said slurry at least one long chain alcohol selected from the group consisting of C₁₂-C₂₂ straight and branched chain alcohols in an amount sufficient to agglomerate the stickies in the absence of cooling; and
c) passing said slurry through a separation means comprising at least one separation device selected from a screen and a cleaner to separate the stickies from the slurry.

In another embodiment of the invention, the agglomerated stickies have not only a larger average size but also a larger total area than the stickies before agglomeration.

### BRIEF DESCRIPTION OF THE DRAWINGS

The following drawings are illustrative of embodiments of the invention and are not intended to limit the invention as encompassed by the claims forming part of the application.
Figure 1 is a photocopy of a sample of stickies removed from a pulp slurry showing the shape and size of stickies under normal pulping conditions without an agglomerating agent; and
Figure 2 is a photocopy of a sample of stickies removed from a pulp slurry showing the shape and size of the stickies after treatment with an agglomeration agent in accordance with the present invention.

### DETAILED DESCRIPTION OF THE INVENTION

The present invention is directed to a method of agglomerating an adhesive composition, known in the industry and referred to hereinafter as "stickles", in an aqueous slurry of paper containing the same by adding an agglomerating agent. The agglomerating agent comprises at least one long chain alcohol in an amount sufficient to cause the agglomeration of the stickies so that they can be effectively removed from the slurry through mechanical means such as by screens and the like. The agglomerating agent enables the stickies to be agglomerated into particles of sufficient hardness that a separate cooling step is not required.

The waste paper is added to a pulper with sufficient water to provide a solids content generally in the range of from about 4 to 18% by weight, preferably from about 8 to 15% by weight and typically about 12% by weight. The temperature of the aqueous slurry is maintained at a temperature of at least 30°C (86°F), preferably within the range of from about 30 to 76.7 °C (86 to 170°F) most preferably from about 40.6 to 43.3°C (105 to 110°F). The pulper is provided with an alkali such as sodium hydroxide sufficient to raise the pH of the pulper to at least 7, preferably from about 7 to 12, most preferably from about 10 to 11. Additional additives may be provided to the pulper such as metal chelating agents and the like according to need.

In accordance with the present invention, at least one long chain alcohol is added to the aqueous slurry of waste paper pulp, preferably in the absence of cooling, in an amount sufficient to agglomerate the stickies so that they have a larger size and total area to facilitate removal from the slurry. The long chain alcohols typically have a carbon length of from C₁₂ to C₂₂. A preferred agglomerating agent is a mixture of C₁₄ and C₁₆ long chain alcohols.

The alcohols employed in the present invention can be straight or branched chained and can also have one or more substituents thereon which do not affect the agglomeration ability of the alcohols. Typical substituents include alkyl groups, ester groups and amide groups. It should be noted that the substituents should not include excess acid groups because the pulper is required to operate at a pH in the neutral to alkaline range (i.e. a pH of at least 7.0).

The amount of the long chain alcohol must be sufficient to cause agglomeration of the stickies to an extent so that the same can be removed through mechanical means such as screen filtering or the like. As used herein the size of the stickies shall mean the largest cross-sectional area of each of the stickies particles. The total area of the stickies shall mean the total or combined cross-sectional area of all of the stickies particles.

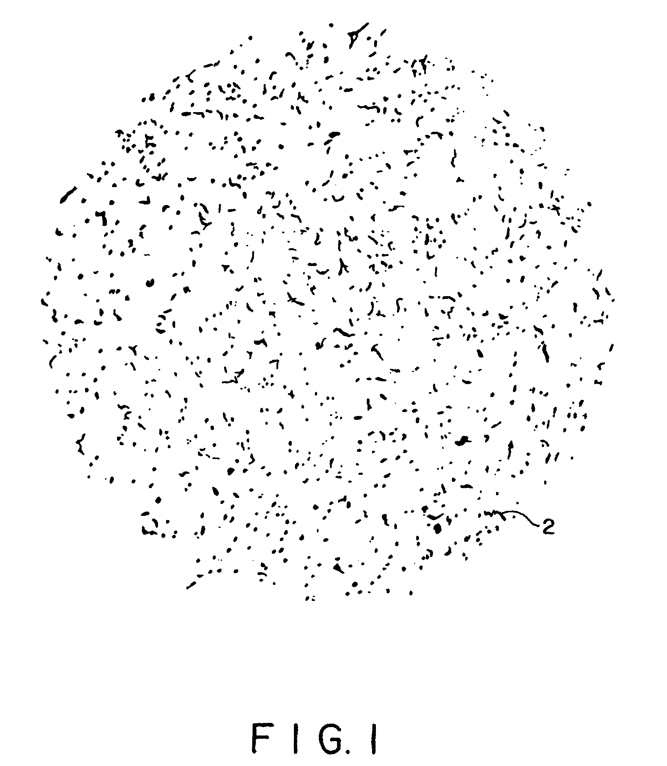

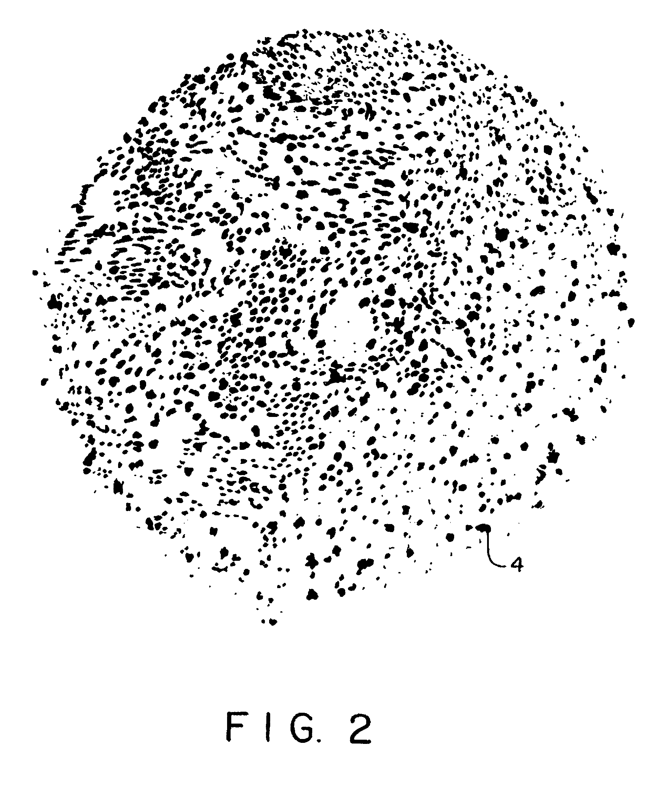

The change in size and total area of the stickies in accordance with the present invention can be observed with reference to Figures 1 and 2. Referring to Figure 1, there is shown a photocopy of a sample of stickies as they appear in an aqueous slurry prior to the addition of the agglomeration agent. The photocopy is made by measuring out a sample of an aqueous slurry of waste paper and then diluting the sample to insure that the stickies do not clog the sample screening system. The sample is diluted to a pulp consistency of no more than about ½%. The diluted sample is then passed through a 0.006" screen Pulmac Masterscreener. Upon completion of screening, the filter paper is carefully removed and placed face down on a sheet of Mylar. The Mylar sheet is placed on a flat surface and a hot iron having a surface temperature of about 112,8°C (235°F) is passed quickly thereover two or three times so as not to cause melting of the stickies.

The filter paper is carefully removed from the Mylar sheet. A second Mylar sheet is placed over the first Mylar sheet. The Mylar sheets are attached together by using a pressure-sensitive label at one of the ends of the Mylar sheets. The samples are then cleaned manually under a stereomicroscope to remove contaminants that are not stickies such as calcium carbonate, fiber bundles and the like. An acceptable sample for further testing is determined by visual observation.

The sheets having the stickies thereon are imaged using any type of imaging apparatus such as, computer generated imagers, photocopy machines, cameras and the like. In the imaging process, particle sizes of ≤ 0.016mm² are eliminated due to limitations in image scanners. The samples shown in Figures 1 and 2 were photocopied using a standard photocopier machine.

As shown in Figure 1, the untreated aqueous slurry produces a sample having a predominant amount of irregular shaped particles 2, many of which can pass through typical screens used for filtering of the slurry.

The addition of the agglomerating agent (i.e. long chain alcohols) in accordance with the present invention causes the stickies to form more uniform particles of greater size (i.e. cross-sectional area) and in some cases greater total area (i.e. total cross-sectional area).

As shown specifically in Figure 2, the stickies 4 after treatment with the agglomerating agent exhibit a more uniform shape and are of significantly greater size and greater total area than the untreated stickies shown in Figure 1. As a result the agglomerated stickies 4 are larger and can therefore be more readily removed from the aqueous slurry through conventional screens.

The amount of the long chain alcohol used in the present invention will depend upon the concentration of stickies within the pulper. For example, the amount of the long chain alcohol will typically be in the range of from about 0.25% by weight to 5.0% by weight, preferably from about 0.5 to 1.0% by weight based on the total weight of the aqueous slurry. Long chain alcohols used in the present invention are effective in removing stickies from an aqueous pulp slurry. Examples of such stickies include acrylates, styrene-butadiene rubbers, polyvinyl acetate, ethylene vinyl acetate, styrene acrylates, polyethylene, isobutylenes and mixtures thereof. The long chain alcohols of the present invention are particularly effective in the agglomeration and removal of stickies based on pressure sensitive adhesives.

The waste paper with the long chain alcohol mixed therein is pulped for a time sufficient to agglomerate the stickies in the slurry, typically from about 5 to 90 minutes, preferably from about 8 to 25 minutes. Additional water is added to the pulper and the resulting slurry is typically forwarded to a holding tank for further mixing. Additional water is added until the slurry has a solids content of from about 2 to 7% by weight, typically about 5% by weight based on the total-weight of the aqueous slurry in the holding tank.

The slurry is then subjected to a series of cleaning steps in which the slurry is passed through a series of coarse and then increasingly finer slot pressure screens sufficient to remove the agglomerated particles of the stickies from the flowing stream of the aqueous slurry. For example, there can be provided a first coarse pressure screen with holes on the order of about 0.052" followed by screening through a 0.008" slot pressure screen followed by a further screening through a 0.006" slot pressure screen followed by passage through a forward centrifugal cleaner. As a result, agglomerated particles comprising the stickies and the long chain alcohols are of sufficient size so that they can not pass through at least one of the screens and are therefore removed from the flowing stream of the aqueous slurry. The agglomeration of particles is accomplished without having to cool the slurry because the particles are sufficiently hard so that they can be readily removed by mechanical means. The aqueous slurry absent the stickies is thereafter collected for use in the production of recycled paper.

It will be understood that while the agglomerating agent is preferably added directly to the pulper, the agglomerating agent may be added to the slurry downstream of the pulper including just before the first screen filtering operation. It is preferred to add the agglomerating agent to the pulper to insure good mixing with the aqueous slurry.

### EXAMPLE 1

113,5 kg (250 lbs.) of waste paper was added to a batch pulper with sufficient water warmed to 40.6 °C (105°F) to provide the pulper with an aqueous slurry having a 12% solids content. 0.17 kg (0.375 lbs.) of DTPA (a metal chelating agent) was added to the pulper. Sodium hydroxide was added in an amount to raise the pH of the aqueous slurry to 11.

5.68 kg (12.5 lbs.) of a mixture of C₁₄ and C₁₆ long chain alcohols was added to the pulper. The mixture was pulped for 8 minutes and samples were taken for analysis.

Thereafter, water was added to the pulper and the aqueous slurry was pumped to a holding tank under stirring. Additional water at a temperature of 40.6°C (105°F) was added so that the aqueous slurry in the holding tank maintained a 5% solids content The aqueous slurry was held in the tank for 45 minutes and samples were thereafter taken.

The aqueous slurry was then subjected to a series of cleaning steps with appropriate dilution to maintain a 5% solids content. The aqueous slurry was first passed through a coarse pressure screen having a hole size of 0.052". Thereafter, the aqueous slurry was passed through a 0.008" slot pressure screen followed by another screening through a 0.006" slot pressure screen. Finally, the aqueous slurry was passed through a forward centrifugal cleaner.

Samples of the aqueous slurry were analyzed for the stickies by screening 100g OD samples through a Pulmac Masterscreener using a 0.006" pressure slot screening. The collected agglomerated particles were transferred to Mylar sheets and analyzed by image analysis as previously described. Results from the pulper are shown in Table 1.

**Table 1**

| | AVERAGE SIZE MM² | MEDIAN SIZE MM² | TOTAL AREA MM² | AMOUNT OF STICKIES REMOVED |
|---|---|---|---|---|
| Control pulper | 0.193 | 0.151 | 160.6 | 33% |
| Long chain alcohol pulper | 0.850 | 0.333 | 2337.9 | 76% |
| | | | | |
| % Increase in size | 440% | 220% | | |
| % Increase in area | | | 1455% | |

As shown in Table 1, the average size of the agglomerates in the pulper brought about by the long chain alcohol was 0.850mm² with a total area of 2,337.9mm².

### CONTROL EXAMPLE

The procedure of Example 1 was repeated except that the mixture of C₁₄ and C₁₆ long chain alcohols was omitted. Samples of the aqueous slurry were taken and compared to the samples of Example 1. The results are shown in Table 1.

As shown in Table 1, the Control Example resulted in an average particle size of the adhesive composition of only 0.193mm² and a total area of only 160.6mm². Thus, the method of the present invention resulted in an increase in particle size of 440% over the control and an increase in total area of agglomerated particles of 1455%. Further as shown in Table 1, the amount of stickies removed after screening through the 0.006" slot pressure screen from the control based on total area was 33%. In accordance with the present invention, the addition of an agglomerating agent resulted in a stickies removal of 76%, which represents a 230% increase over the control.

## Claims

1. A method of removing stickies from a pulp slurry containing at least partially recycled paper, said method comprising:
a) pulping said paper in an aqueous slurry heated to a temperature in the range of 30°C (86°F) to 76.6°C (170°F) at a pH of at least 7 having a solids content of from 8 to 18% by weight;
b) adding to said slurry at least one long chain alcohol selected from the group consisting of C₁₂-C₂₂ straight and branched chain alcohols in an amount sufficient to agglomerate the stickies in the absence of cooling; and
c) passing said slurry through a separation means comprising at least one separation device composed of a screen and a cleaner to separate the stickies from the slurry.

2. The method of claim 1 wherein the long chain alcohol is a mixture of C₁₄-C₁₆ alcohols.

3. The method of claim 1 comprising adding said long chain alcohol to said slurry during the pulping step.

4. The method of claim 1 further comprising maintaining the at least one long chain alcohol in the slurry for 5 to 90 minutes.

5. The method of claim 1 wherein the amount of the at least one long chain alcohol is from 0.25 to 5.0% by weight based on the total weight of the slurry.

6. The method of claim 1 wherein the temperature is from 40.6°C (105°F) to 43.3°C (100°F).

7. The method of claim 4 comprising maintaining the at least one long chain alcohol in the slurry for 8 to 25 minutes.

8. The method of claim 5 wherein the amount of the at least one long chain alcohol is from 0.5 to 1.0% by weight.

9. The method of claim 1 comprising pulping said paper in an aqueous slurry heated to a temperature in the range of 30°C (86°F) to 76.6°C (170°F) at a pH of at least 7 having a solids content of from 12 to 18% by weight.

## Patentansprüche

1. Verfahren zur Entfernung von klebrigen Verunreinigungen (stickies) aus einer Pulpeaufschlämmung, die mindestens teilweise wiederverwertetes Papier enthält, wobei das Verfahren umfasst:
a) Aufschluss des Papiers in einer wässrigen Aufschlämmung, die auf eine Temperatur im Bereich von 30 °C (86 °F) bis 76,6 C (170 °F) erhitzt ist, bei einem pH von mindestens 7, mit einem Feststoffgehalt von 8 bis 18 Gew.-%;
b) Zusetzen mindestens eines langkettigen Alkohols ausgewählt aus der Gruppe bestehend aus geradkettigen und verzweigten C₁₂ - C₂₂-Alkoholen zu der Aufschlämmung, in einer ausreichenden Menge um die klebrigen Verunreinigungen in Abwesenheit von Kühlung zu agglomerieren; und
c) Durchleiten der Aufschlämmung durch ein Trennmittel umfassend mindestens eine Trennvorrichtung bestehend aus einem Sieb und einem Reiniger zur Abtrennung der klebrigen Verunreinigungen aus der Aufschlämmung.

2. Verfahren nach Anspruch 1, wobei der langkettige Alkohol eine Mischung aus C₁₄ - C₁₆-Alkoholen ist.

3. Verfahren nach Anspruch 1, umfassend das Zusetzen des langkettigen Alkohols zu der Aufschlämmung während des Aufschlussschrittes.

4. Verfahren nach Anspruch 1, ferner umfassend das Halten des mindestens einen langkettigen Alkohols in der Aufschlämmung für 5 bis 90 Minuten.

5. Verfahren nach Anspruch 1, wobei die Menge des mindestens einen langkettigen Alkohols von 0,25 bis 5 Gew.-%, basierend auf dem Gesamtgewicht der Aufschlämmung, beträgt.

6. Verfahren nach Anspruch 1, wobei die Temperatur bei 40,6 °C (105 °F) bis 43,3 °C (110 °F) liegt.

7. Verfahren nach Anspruch 4, ferner umfassend das Halten des mindestens einen langkettigen Alkohols in der Aufschlämmung für 8 bis 25 Minuten.

8. Verfahren nach Anspruch 5, wobei die Menge des mindestens einen langkettigen Alkohols von 0,5 bis 1,0 Gew.-% beträgt

9. Verfahren nach Anspruch 1, umfassend das Aufschließen des Papiers in einer wässrigen Aufschlämmung, die auf eine Temperatur im Bereich von 30 °C (86 °F) bis 76,6 °C (170 °F) erhitzt ist, bei einem pH von mindestens 7, mit einem Feststoffgehalt von 12 bis 18 Gew.- %

## Revendications

1. Procédé d'extraction des impuretés collantes d'une boue de pâte à papier contenant au moins partiellement du papier recyclé, ledit procédé comprenant les étapes consistant à :
a) mettre en pâte ledit papier dans une boue aqueuse chauffée à une température comprise entre 30 °C (86 °F) et 76,6 °C (170 °F) à un pH d'au moins 7 ayant une teneur en solides comprise entre 8 et 18 % en poids :
b) à ajouter à ladite boue au moins un alcool à longue chaîne choisi dans le groupe composé d'alcools C₁₂ à C₂₂ à chaîne ramifiée et à chaîne droite en quantité suffisante pour agglomérer les impuretés collantes en l'absence de refroidissement ; et
c) à passer ladite boue à travers un moyen de séparation comprenant au moins un dispositif de séparation composé d'un tamis et d'un épurateur pour séparer les impuretés collantes de la boue.

2. Procédé selon la revendication 1 dans lequel l'alcool à longue chaîne est un mélange d'alcools C₁₄ - C₁₈.

3. Procédé selon la revendication 1 comprenant l'adjonction dudit alcool à longue chaîne à ladite boue pendant l'étape de mise en pâte.

4. Procédé selon la revendication 1 comprenant en outre le maintien dudit au moins un alcool à longue chaîne dans la boue pendant 5 à 90 minutes.

5. Procédé selon la revendication 1 dans lequel la quantité dudit au moins un alcool à longue chaîne est comprise entre 0,25 et 5,0 % en poids sur la base du poids total de la boue.

6. Procédé selon la revendication 1 dans lequel la température est comprise entre 40,6 °C (105 °F) et 43,3 °C (110 °F).

7. Procédé selon la revendication 4 comprenant le maintien dudit au moins un alcool à longue chaîne dans la boue pendant 8 à 25 minutes.

8. Procédé selon la revendication 5 dans lequel la quantité dudit au moins un alcool à longue chaîne est comprise entre 0,5 et 1,0 % en poids.

9. Procédé selon la revendication 1 comprenant la mise en pâte dudit papier dans une boue aqueuse chauffée à une température comprise entre 30 °C (86 °F) et 76,6 °C (170 °F) à un pH d'au moins 7 ayant une teneur en solides comprise entre 12 et 18 % en poids.
